(19) Europäisches Patentamt
European Patent Office
Office européen des brevets

(11) EP 3 279 248 A1

(12) EUROPEAN PATENT APPLICATION

(43) Date of publication:
07.02.2018 Bulletin 2018/06

(51) Int Cl.:
*C08K 5/13* (2006.01) *C08K 5/526* (2006.01)
*C08K 5/527* (2006.01)

(21) Application number: 17183602.6

(22) Date of filing: 27.07.2017

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 02.08.2016 JP 2016151726
05.07.2017 JP 2017131779

(71) Applicant: TOTO LTD.
Kitakyushu-shi
Fukuoka 802-8601 (JP)

(72) Inventors:
- SAKAI, Sena
Kitakyushu-shi, Fukuoka 802-8601 (JP)
- MATSUMOTO, Satoru
Kitakyushu-shi, Fukuoka 802-8601 (JP)
- MITSUHASHI, Yoshiharu
Kitakyushu-shi, Fukuoka 802-8601 (JP)

(74) Representative: Takeuchi, Maya et al
Fédit-Loriot
38, avenue Hoche
75008 Paris (FR)

# (54) STABILIZED POLYOLEFIN RESIN MATERIAL

(57) Disclosed is a resin material containing a polyolefin, which has a property that discoloration (red to pink), which is considered to be caused by a phenol-based antioxidant, is effectively prevented for a long period of time. The resin material contains two kinds of specific secondary antioxidants represented by the following formulas (I) and (II) added thereto together with a phenol-based antioxidant:

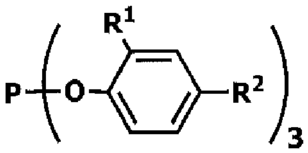

(I)

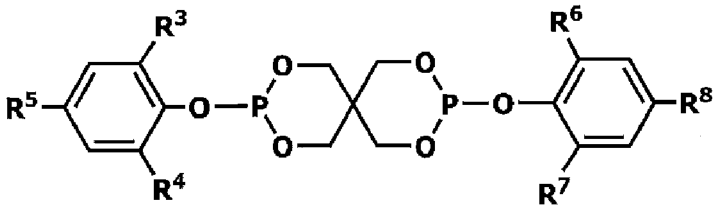

(II)

wherein $R^1$, $R^2$, $R^3$, $R^4$, $R^5$, $R^6$, $R^7$, and $R^8$ each independently represent a linear or branched hydrocarbon group having 1 to 20 carbon atoms.

EP 3 279 248 A1

## Description

[FIELD OF INVENTION]

The present invention relates to a stabilized resin material. In particular, the present invention relates to a resin material that is stabilized by a combination of a specific primary antioxidant(s) and a specific secondary antioxidant(s) and, especially, that is suppressed in discoloration.

[BACKGROUND ART]

When attacked by heat, light, or physical stress, resin materials, for example, polyolefins (RH), generate free radicals (R*), which react with oxygen to generate peroxy radicals (ROO*). The peroxy radicals can abstract hydrogens from other molecules (RH) to become hydroperoxides (ROOH) and, at the same time, further generate new free radicals (R*). The newly generated free radicals may trigger next reactions, that is, chain reactions occur, which leads to deterioration of the resin materials.
As the hydroperoxides (ROOH) are unstable, they decompose themselves further and generate new radicals (for example, RO*). The new radicals can abstract hydrogens from other molecules to increase radicals, which also results in deterioration of the resin materials. Such decomposition of molecules via hydroperoxides is referred to as autoxidation.
In order to prevent such decomposition of resin molecules, i.e., to prevent deterioration, antioxidants can be used. The antioxidants known in the art include ones that can mainly trap radicals to prevent autoxidation in its early stage (referred to as "primary antioxidants"), and also include ones that can suppress further generation of free radicals by decomposing the unstable hydroperoxides into stable products (referred to as "secondary antioxidants"). The primary antioxidants include, for example, phenol-based antioxidants and the like. The secondary antioxidants include, for example, phosphoric acid-based antioxidants, sulfur-based antioxidants, and the like. A combined use of the primary antioxidants and the secondary antioxidants is also known and exhibits a synergistic effect for preventing oxidation.
Furthermore, it is known that the phenol-based antioxidants, which are widely used as the primary antioxidants, become quinone compounds and then stilbene quinones, which may color or discolor the resins to which the antioxidants have been added. It is not desirable that the antioxidants added to prevent deterioration of the resin materials damage appearance thereof. Therefore, there remains a need to suppress discoloration of the resin materials when using the phenol-based antioxidants.
With regard to suppression of the discoloration, for example, JP 2002-527595 A (Patent Literature 1) discloses a group of antioxidant compounds that have structures similar to but not exactly the same as those of the present invention, in combination of a primary antioxidant(s) and a secondary antioxidant(s). Patent Literature 1 also discloses that the combination results in increased stability and whiteness of a polymer. However, the Patent Literature 1 has an object of solving disadvantages caused by addition of phosphite esters that are secondary antioxidants for preventing discoloration of the primary antioxidants, and presupposes presence of water. Further, JP 2005-082642 A (Patent Literature 2) discloses a group of compounds used in the present invention as antioxidants, but does not disclose that the compounds were used by specifically combining them nor, of course, confirm an effect of the combination.

[Citation List]

[Patent Literature]

[Patent Literature 1] JP 2002-527595 A
[Patent Literature 2] JP 2005-082642 A

[SUMMARY OF INVENTION]

The present inventors have now found that, by using specific two kinds of secondary antioxidants in combination, discoloration (red to pink), which is considered to be caused by phenol-based antioxidants, can be effectively prevented for a long period of time. The present invention is based on such findings.
Accordingly, an object of the present invention is to provide a resin material containing a polyolefin, the resin material being effectively prevented from discoloration of the resin that occurs when a phenol-based antioxidant is used.
Further, an object of the present invention is to provide a combination of antioxidants that can be used in combination with a phenol-based antioxidant in a resin material containing a polyolefin as a main polymer component.

Furthermore, an object of the present invention is to provide an antioxidant for polyolefins and a green body.

The resin material according to the present invention comprises:

(1) a polyolefin;

(2) a compound represented by the following formula (I):

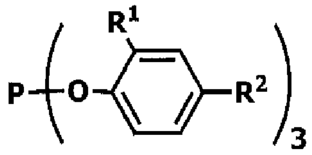

(I)

wherein, $R^1$ and $R^2$ each independently represent a linear or branched hydrocarbon group having 1 to 20 carbon atoms;

(3) a compound represented by the following formula (II):

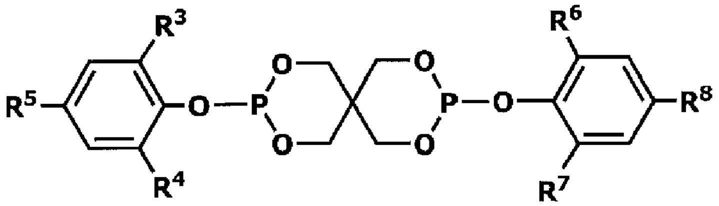

(II)

wherein, $R^3$, $R^4$, $R^5$, $R^6$,$R^7$, and $R^8$ each independently represent a linear or branched hydrocarbon group having 1 to 20 carbon atoms; and

(4) a phenol-based antioxidant.

Further, the antioxidant for polyolefins according to the present invention comprises a compound represented by the formula (I), a compound represented by the formula (II), and a phenol-based antioxidant.

Furthermore, the green body according to the present invention comprises the resin material according to the present invention.

According to the present invention, the discoloration (red to pink) of a resin material containing a polyolefin, which is considered to be caused by phenol-based antioxidants, can be effectively prevented for a long period of time. The present inventors have confirmed experimentally that the effect according to the present invention is obtained by a combination of at least two kinds of specific secondary antioxidants and is remarkable in comparison to that exhibited by other secondary antioxidants having similar structures.

[DETAILED DESCRIPTION OF INVENTION]

## Resin Material

The resin material according to the present invention comprises at least (1) a polyolefin, (2) a compound of the formula (I), (3) a compound of the formula (II), and (4) a phenol-based antioxidant. According to the present invention, discoloration (red to pink) of the resin material, which is considered to be caused by the phenol-based antioxidant, can be effectively prevented for a long period of time, by a combination of the antioxidants (2), (3), and (4). The reason for this is not definite but is considered as follows. Various reasons may be presumed why the phenol-based antioxidant is changed to a stilbene quinone via a quinone-based compound. Among them, it is considered that the phenol-based antioxidant traps a radical and, as a result, changes its structure to finally become a stilbene quinone. In the present invention, it is considered that the compound of the formula (I) and the compound of the formula (II) interact synergistically to effectively prevent generation of a radical derived from an unstable hydroperoxide and efficiently suppress change in a color-developing structure of the phenol-based antioxidant. In particular, from comparison of Examples and Comparative Examples described later, it is considered desirable that one of ester structures of phosphorous acid has a structure of a phenyl substituted by alkyl groups at 2, 4, and 6 positions. The above is only a hypothesis, and the present invention should not be understood as being limited thereto.

The resin material according to the present invention contains a plurality of antioxidants in combination. In the present invention, however, the presence of a plurality of antioxidants has little effect on physical properties such as hardness and chemical resistance of the resin material. The present invention is also advantageous in this respect.

Meanwhile, the resin material according to the present invention allows presence of unavoidable water and does not essentially require addition of water. However, it is desirable to avoid the presence of water, because it generally causes defects in the molding process of the resin material resulting in poor appearance.

(1) Polyolefin

The resin material according to the present invention contains a polyolefin. In the present invention, polyolefin means a polymer of an olefinic compound, that is, a hydrocarbon having at least one double bond as a bond between carbon atoms, and may be either a homopolymer or a copolymer. The olefinic compound, that is, a monomer includes, for example, mono-1-olefins having 2 to 16 carbon atoms, preferably mono-1-olefins having 2 to 10 carbon atoms, and more preferably mono-1-olefins having 2 to 6 carbon atoms. Specific examples thereof include, though not limited thereto, ethylene, propylene, 1-butene, 1-pentene, 1-hexene, 1-octene, and the like. Examples of polyolefins to which the present invention is favorably applied include polyethylene, polypropylene, and the like.

In one preferred embodiment of the present invention, as the polyolefin in the present invention, an olefin-based elastomer containing a polyolefin combined with a so-called elastomer component may be used. The elastomer component includes natural rubber, ethylene-propylene rubber, polybutadiene rubber, and the like. The mode of addition of the elastomer component may include blending by finely dispersing the elastomer component, addition accompanying chemical crosslinking. The present invention can be widely applied to heretofore known olefin-based elastomers as well as materials that will become known in the future and classified as olefin-based elastomers.

The resin material according to the present invention can be used as a polyolefin without any particular limitation. Especially, the material is preferably used in applications where discoloration impairs its commercial value.

(2) Compound of formula (I)

In the present invention, the compound of the formula (I) is a secondary antioxidant. In the formula, $R^1$ and $R^2$ each independently represent a linear or branched hydrocarbon group, preferably alkyl group, having 1 to 20 carbon atoms, preferably 1 to 16 carbon atoms, and more preferably 1 to 8 carbon atoms. Examples of $R^1$ and $R^2$ include methyl, tert-butyl, and 1,1-dimethylpropyl.

Preferable examples of the compound of the formula (I) include tris (2,4-di-tert-butylphenyl) phosphite, tris (2-tert-butylphenyl) phosphite, and tris [2,4-di-(1,1-dimethylpropyl)phenyl] phosphite.

The addition amount of the compound of the formula (I) may be suitably determined by taking its effect into consideration. For example, the amount is about 0.01 to 1% by mass, and preferably about 0.05 to 0.5% by mass relative to the polymer component.

(3) Compound of formula (II)

In the present invention, the compound of the formula (II) is also a secondary antioxidant. In the formula, $R^3$, $R^4$, $R^5$, $R^6$, $R^7$, and $R^8$ each independently represent a linear or branched hydrocarbon group, preferably alkyl group, having 1 to 20 carbon atoms, preferably 1 to 16 carbon atoms, and more preferably 1 to 8 carbon atoms. Examples of $R^3$, $R^4$, $R^5$, $R^6$, $R^7$, and $R^8$ include methyl, tert-butyl, and 1,1-dimethylpropyl.

Preferable examples of the compound of the formula (II) include bis-(2,6-di-tert-butyl-4-methylphenyl)pentaerythritol diphosphite.

The addition amount of the compound of the formula (II) may be suitably determined by taking its effect into consideration. For example, the amount is about 0.01 to 1% by mass, and preferably about 0.05 to 0.5% by mass relative to the polymer component.

(4) Phenol-based antioxidant

The phenol-based antioxidant contained in the resin material according to the present invention prevents deterioration of polyolefins as a so-called primary antioxidant. In the present invention, phenol-based antioxidant means an antioxidant having a function of mainly trapping a radical. Phenol-based antioxidant is preferably one classified as a hindered phenol. The phenol-based (phenol derivative) antioxidant is selected from the group consisting of monophenols,

bisphenols, thiobisphenols, polyphenols, hydroxybenzyl aromatic carboxylates, amides of β-(3,5-di-tert-butyl-4-hydroxyphenyl)propionic acid, esters of β-(3,5-di-tert-butyl-4-hydroxyphenyl)propionic acid with mono- or polyhydric alcohols, spiro compounds, and mixtures thereof.

The monophenols may include 2,6-di-tert-butyl-4-methyl phenol, 2-tert-butyl-4-methoxyphenol, and 4-(hydroxymethyl)-2,6-di-tert -butylphenol.

The bisphenols may include 2,2'-Methylenebis(4,6-di-te rt-butylphenol), 2,2'-methylenebis(6-tert-butyl-4-methylphenol), 2,2'-met hylenebis(6-tert-butyl-4-ethylphenol), 2,2-methylenebis[4-methyl-6-(α-m ethylcyclohexyl)phenol], 1,1-bis(5-tert-butyl-4-hydroxy-2-methylphenyl)b utane, 2,2-bis(5-tert-butyl-4-hydroxy-2-methylphenyl)butane, 2,2-bis-(3, 5-di-tert-butyl-4-hydroxyphenyl)propane, 1,1,3-tris(5-tert-butyl-4-hydroxy -2-methylphenyl)butane, 2,2-bis(5-tert-butyl-4-hydroxy-2-methylphenyl)-4-n-dodecylmercaptobutane, 1,1,5,5-tetra(5-tert-butyl-4-hydroxy-2-meth yl-phenyl)pentane, ethylene glycol-bis[3,3-bis(3'-tert-butyl-4'-hydroxyph enyl) butyrate], 1,1-bis(3,5-dimethyl-2-hydroxyphenyl)-3-(n-dodecylthio) butane, and 4,4'-thiobis(6-tert-butyl-3-methylphenol).

The thiobisphenols may include 4,4'-thiobis(6-tert-butyl-m-cresol), 1,1'-thiobis(2-naphthol), and 2,2'-thiobis(4-methyl-6-tert-butyl phenol).

The polyphenols may include tetrakis(methylene-3-(3,5-di-tert-butyl-4-hydroxyphenyl)propionate) methane, 1,3,5-trimethyl-2,4,6 -tris(3,5-di-tert-butyl-4-hydroxybenzyl)benzene, 1,3,5-tris(3,5-di-tert-buty 1-4-hydroxybenzyl) isocyanurate, and tetrakis[methylene-(3,5-di-tert-but yl-4-hydroxyhydrocinnamate)]methane.

The hydroxybenzyl aromatic carboxylates may i nclude 1,3,5-tri(3,5-di-tert-butyl-4-hydroxybenzyl)-2,4,6-trimethylbenzen e, 2,2-bis(3,5-di-tert-butyl-4-hydroxybenzyl)malonic acid dioctadecyl es ter, 1,3,5-tris(3,5-di-tert-butyl-4-hydroxybenzyl) isocyanurate, and 3,5-d i-tert-butyl-4-hydroxybenzylphosphonic acid diethyl ester.

The amides of β-(3,5-di-tert-butyl-4-hydroxyphenyl)propi onic acid may include 1,3,5-tris(3,5-di-tert-butyl-4-hydroxyphenyl-propi onyl-hexahydro-s-triazine and N,N'-di(3,5-di-tert-butyl-4-hydroxyphenylpropionyl)hexamethylenediamine.

The addition amount of the phenol-based antioxidant may be suitably determined by taking its effect into consideration. For example, the amount is about 0.01 to 1% by mass, and preferably about 0.05 to 0.5% by mass relative to the polymer component.

Other components

To the resin material according to the present invention, various components, which are ordinarily or generally added arbitrarily to polyolefins, may be added.

Antioxidant and green body

As is clear from the above, according to one embodiment of the present invention, an antioxidant for polyolefins is provided, which comprises a compound represented by the formula (I), a compound represented by the formula (II), and a phenol-based antioxidant. Further, according to another embodiment of the present invention, a green body is provided, which comprises the resin material according to the present invention. The green body can be used in a desirable use without any change in its various physical properties even by addition of the antioxidant. Further, the green body is effectively prevented from discoloration.

[EXAMPLES]

The following Examples illustrate the present invention in more detail. However, it should be noted that the present invention is not limited to these Examples. In addition, unless otherwise noted, % means % by mass in the following.

1. Preparation of samples

Resin materials having the following compositions were provided.

[Table 1]

| | Example 1 | Example 2 | Comparative Example 1 | Comparative Example 2 |
|---|---|---|---|---|
| Olefin-based elastomer | 99.7 | 99.6 | 99.8 | 99.8 |
| Compound of formula (I) | 0.1 | 0.1 | 0.1 | 0.1 |
| Compound of formula (II) | 0.1 | 0.2 | - | - |

(continued)

| | Example 1 | Example 2 | Comparative Example 1 | Comparative Example 2 |
|---|---|---|---|---|
| Compound of formula (III) | - | - | - | 0.2 |
| Phenol-based antioxidant | 0.1 | 0.1 | 0.1 | 0.1 |

In Table 1, specific materials are as follows:

- the olefin-based elastomer: an olefin-based thermoplastic elastomer with PP as the hard segment;
- the compound of formula (I): a compound corresponding to the compound of formula (I) wherein $R^1$ and $R^2$ are tert-butyl, which is commercially available from ADEKA Corporation as "2112";
- the compound of formula (II): a compound corresponding to the compound of formula (II) wherein $R^3$, $R^4$, $R^6$, and $R^7$ are tert-butyl, and $R^5$ and $R^8$ are methyl, which is commercially available from ADEKA Corporation as "PEP-36"; and
- the compound of formula (III): a compound corresponding to the compound represented by the following structural formula (III):

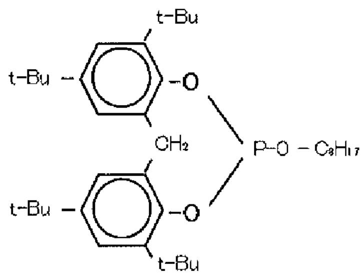

(I I I)

which is commercially available from ADEKA Corporation as HP-10.

The resin materials having the above compositions were molded by injection molding method to obtain sample plates (10 cm x 5 cm) and dumbbell test pieces. The injection molding conditions were such that the cylinder temperature was set at 190°C and the mold temperature was set at 40°C. Further, toilet seat buffer pads, which are disposed on the toilet seat on the side which is contact with the toilet, were prepared in accordance with the above molding method.

2. Forced circulation type heat aging test

The toilet seat buffer pads and the sample plates, obtained in the above 1, were placed in a forced circulation type heat aging tester (manufactured by ESPEC Corporation) and accelerated tests of resin deterioration by heat were carried out. The temperature was set at 70°C. The testing time was set at a maximum of 624 hours.

3. Measurement of discoloration and the result

The test pieces were taken out of the tester mentioned in the above 2 after the time shown in the following table had passed, and degrees of discoloration in comparison to initial test pieces were measured using a spectrophotometer CM-5 (manufactured by Konica Minolta, Inc.). Measured were a value, b value, and L value, and the degree of discoloration was expressed by Δa, a variation in a value (showing a color change in the red-green region), and the following ΔE as indices:

$$\Delta E^2=(\Delta a^2+\Delta b^2)+\Delta L^2$$

The results were as shown in the following tables 2 and 3.

[Table 2]

| Test piece: toilet seat buffer pad | | | | |
|---|---|---|---|---|
| Time (hr) | | Example 1 | Example 2 | Comparative Example 1 |
| 192 | ΔE | 0.44 | 0.35 | 1.97 |
| | Δa | 0.21 | 0.12 | 0.95 |
| 312 | ΔE | 0.97 | 0.63 | 3.90 |
| | Δa | 0.46 | 0.24 | 2.07 |
| 624 | ΔE | 2.13 | 1.12 | 4.17 |
| | Δa | 0.99 | 0.48 | 2.08 |

[Table 3]

| Test piece: sample plate | | | | | |
|---|---|---|---|---|---|
| Time (hr) | | Example 1 | Example 2 | Comparative Example 1 | Comparative Example 2 |
| 168 | ΔE | 1.03 | 0.66 | 4.50 | 2.73 |
| | Δa | 0.33 | 0.12 | 2.73 | 1.51 |

It was confirmed that, in the resin materials according to the present invention, discoloration is remarkably suppressed in comparison to a case where only the compound of formula (I) is used and in comparison to a case where the compound of formula (I) is used in combination with an antioxidant having a different structure therefrom such as the compound of formula (III).

4. Evaluation of physical properties of material

(a) Hardness

Hardness of the toilet seat buffer pad prepared in the above 1 was measured by using a durometer in accordance with JIS K 6253-3/ISO 7619-1.

(b) Tensile strength

The tensile strength test was carried out by using the dumbbell test pieces prepared in the above 1. The test was performed in accordance with JIS K 6251 / ISO 37 by stretching the test pieces using an autograph (manufactured by Shimadzu Corporation) at a rate of 500 mm/min, and the maximum stress was recorded.

(c) Tear strength

Angle test pieces without notch were punched out of the sample plates prepared in the above 1, and the tear strength test was carried out using them. The test was performed in accordance with JIS K 6252 / ISO 34-1 by stretching the test pieces using an autograph (manufactured by Shimadzu Corporation) at a rate of 500 mm/min, and the maximum stress was recorded. (d) Compression permanent set

Using the sample plates prepared in the above 1, 25% compression permanent set was measured in accordance with JIS K 6262 /ISO 815.

The results of the above tests were as shown in the table 4 described below.

5. Detergent resistance

The toilet seat buffer pads prepared in the above 1 were immersed in the following detergents for 7 days, and the degree of discoloration was measured in accordance with the test method of the above 3:

- Acid-based detergent: Sanpol (Dainihon Jochugiku Co., Ltd.);

- Alkali-based detergent: Phosphorus-free Forward Cleaner (CxS Corporation);
- Chlorine-based detergent: Wide Hiter (Kao Corporation);
- Neutral detergent: Toilet Magiclean (Kao Corporation).

The results of the above test were as shown in the following table 4.

[Table 4]

| | | Example 1 | Example 2 | Comparative Example 1 |
|---|---|---|---|---|
| Physical properties | Hardness | 96 | 96 | 96 |
| | Tensile strength [MPa] | 8.2 | 8.2 | 8.0 |
| | Tear strength [kN/m] | 105 | 104 | 105 |
| | Compression permanent set [%] | 61 | 61 | 61 |
| Detergent resistance [ΔE] | Acid-based detergent | 0.31 | 0.25 | 0.37 |
| | Alkali-based detergent | 0.15 | 0.19 | 0.15 |
| | Chlorine-based detergent | 0.13 | 0.13 | 0.24 |
| | Neutral detergent | 0.05 | 0.11 | 0.13 |

From the table, it can be seen that addition of the antioxidant according to the present invention has little effect on the various physical properties of the resin.

## Claims

**1.** A resin material comprising:

(1) a polyolefin;
(2) a compound represented by the following formula (I):

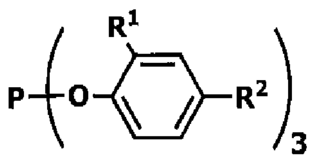

(I)

wherein, $R^1$ and $R^2$ each independently represent a linear or branched hydrocarbon group having 1 to 20 carbon atoms;
(3) a compound represented by the following formula (II):

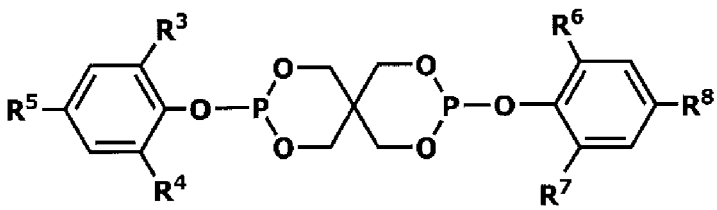

(I I)

wherein $R^3$, $R^4$, $R^5$, $R^6$, $R^7$, and $R^8$ each independently represent a linear or branched hydrocarbon group

having 1 to 20 carbon atoms; and
(4) a phenol-based antioxidant.

2. The resin material according to claim 1, wherein the polyolefin is an olefin-based elastomer containing a polyolefin combined with a elastomer component.

3. The resin material according to claim 1 or 2, wherein the compound represented by the formula (I) is a compound wherein $R^1$ and $R^2$ are tert-butyl.

4. The resin material according to any one of claims 1 to 3, wherein the compound represented by the formula (II) is a compound wherein $R^3$, $R^4$, $R^6$, and $R^7$ are tert-butyl, and $R^5$ and $R^8$ are methyl.

5. The resin material according to any one of claims 1 to 4 which is substantially free of water.

6. An antioxidant for polyolefins comprising a compound represented by the formula (I), a compound represented by the formula (II), and a phenol-based antioxidant as defined in any one of claims 1 to 5.

7. A green body comprising the resin material according to any one of claims 1 to 5.

Europäisches Patentamt
European Patent Office
Office européen des brevets

# EUROPEAN SEARCH REPORT

Application Number
EP 17 18 3602

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/256266 A1 (ZENNER JOHN MATHEW [US] ET AL) 7 October 2010 (2010-10-07)<br>* paragraph [0043]; examples 26,31,35; tables 8-10 *<br>----- | 1-7 | INV.<br>C08K5/13<br>C08K5/526<br>C08K5/527 |
| X | US 2013/237114 A1 (KAWAMOTO NAOSHI [JP] ET AL) 12 September 2013 (2013-09-12)<br>* Comparative examples 18-1, 18-6, 19-1, 30-1, 30-7;<br>paragraphs [0134] - [0142]; examples 13-1,25-1; tables 12,13,24 *<br>----- | 1-7 | |
| X | DATABASE WPI<br>Week 201649<br>Thomson Scientific, London, GB;<br>AN 2016-185345<br>XP002776112,<br>-& CN 105 385 049 A (JIANGSU POLYMERICS RUBBER CO LTD) 9 March 2016 (2016-03-09)<br>* abstract *<br>----- | 1-7 | |
| | | | TECHNICAL FIELDS SEARCHED (IPC) |
| | | | C08K<br>C08L |

The present search report has been drawn up for all claims

1

| Place of search | Date of completion of the search | Examiner |
|---|---|---|
| Munich | 1 December 2017 | Lohner, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 17 18 3602

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2017

| Patent document cited in search report | Publication date | Patent family member(s) | Publication date |
|---|---|---|---|
| US 2010256266 A1 | 07-10-2010 | AU 2007254412 A1 | 29-11-2007 |
| | | BR PI0711476 A2 | 16-11-2011 |
| | | CN 101448888 A | 03-06-2009 |
| | | CN 102417611 A | 18-04-2012 |
| | | NZ 572813 A | 28-10-2011 |
| | | NZ 595548 A | 28-03-2013 |
| | | US 2009149581 A1 | 11-06-2009 |
| | | US 2010256266 A1 | 07-10-2010 |
| | | WO 2007136565 A1 | 29-11-2007 |
| US 2013237114 A1 | 12-09-2013 | BR 112013012060 A2 | 16-08-2016 |
| | | CN 103210130 A | 17-07-2013 |
| | | EP 2642008 A1 | 25-09-2013 |
| | | EP 3042990 A1 | 13-07-2016 |
| | | KR 20130098396 A | 04-09-2013 |
| | | US 2013237114 A1 | 12-09-2013 |
| | | WO 2012067017 A1 | 24-05-2012 |
| CN 105385049 A | 09-03-2016 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002527595 A
- JP 2005082642 A